# EUROPÄISCHE PATENTSCHRIFT

(11) **EP 1 423 964 B1**
(45) Veröffentlichungstag und Bekanntmachung des Hinweises auf die Patenterteilung: **30.11.2011**
(21) Anmeldenummer: 02774306.1
(22) Anmeldetag: 04.09.2002
(51) Int. Cl.: H04L 29/12

(54) **SKALIERBARES PEER-TO-PEER-NETZWERK MIT EINEM VERZEICHNISDIENST**
SCALABLE PEER-TO-PEER-NETWORK WITH A DIRECTORY SERVICE
RESEAU POINT A POINT ECHELONNABLE PRESENTANT UN SERVICE DE REPERTOIRE

(30) Priorität: 06.09.2001 DE 10143754
(43) Veröffentlichungstag der Anmeldung: 02.06.2004
(73) Patentinhaber: SIEMENS AKTIENGESELLSCHAFT, 80333 München (DE)
(72) Erfinder: RUSITSCHKA, Steffen, 81543 München (DE); SOUTHALL, Alan, 81247 München (DE)
(86) Internationale Anmeldenummer: PCT/DE2002/003271
(87) Internationale Veröffentlichungsnummer: WO 2003/024021

(56) Entgegenhaltungen:
- EP-A- 1 009 130
- MICHAEL T. PRINKEY: "An Efficient Scheme for Query Processing on Peer-to-Peer Networks" HTTP://AEOLUSRES.HOMESTEAD.COM/FILES/, 1. Januar 2001 (2001-01-01), XP002241324 Aeolus Research, Inc
- SHELLEY Q. ZHUANG ET AL.: "Bayeux: An Architecture for Scalable and Fault-tolerant Wide-area Data Dissemination " HTTP://WWW.CS.BERKELEY.EDU/~RAVENBEN/PUBLI CATIONS/ABSTRACTS/BAYEUX.HTML, 1. Juni 2001 (2001-06-01), XP002241325 Eleventh International Workshop
- "SCOPING MULTICASTS IN WAN-INTERCONNECTED LOCAL NETWORKS" IBM TECHNICAL DISCLOSURE BULLETIN, IBM CORP. NEW YORK, US, Bd. 34, Nr. 8, 1992, Seiten 68-71, XP000302049 ISSN: 0018-8689
- MARC FINDELI: "P2P (Peer-to-Peer Networking)" HTTP://FINDELI.COM/DOCS/P2P.PDF, 1. Juli 2001 (2001-07-01), XP002241326 TU München

## Beschreibung

Die Erfindung betrifft ein Verfahren zur Bildung eines Verzeichnisdienstes in einem skalierbaren Peer-to-Peer-Netzwerk gemäß dem Oberbegriff des Anspruchs 1.

Bei bekannten skalierbaren, also hinsichtlich der Anzahl der Peers nicht begrenzten Peer-to-Peer-Netzwerken, wie beispielsweise Napster, Gnutella, Freenet, usw., können sich Peers, also Rechner, anmelden, innerhalb aller angemeldeten Peers nach Dateien suchen und/oder selbst Dateien für den Zugriff durch andere freigeben (sogenanntes file-sharing)..

Hierbei werden Peers bei zentralistischen Peer-to-Peer-Netzwerken bei einem oder mehreren zentralen Servern angemeldet und von den Peers freigegebene Dateien mittels eines auf einem Server laufenden Verzeichnisdienst registriert.

Für die Suche nach einer bestimmten Datei stellt ein Peer eine entsprechende Suchanfrage an den Server, welcher ihm daraufhin eine Liste von Peers sendet (Verzeichnisdienst), die diese Datei freigegeben haben. Der suchende Peer kann dann einen dieser Peers auswählen und die Datei direkt von diesem Peer anfordern bzw. downloaden.

Nachteilig bei diesen zentralistischen Peer-to-Peer-Netzwerken, wie beispielsweise Napster, iMesh, Audiogalaxy, Songspy usw., ist die Abhängigkeit von der Verfügbarkeit eines zentralen Servers, ohne welchen der Verzeichnisdienst und damit sowohl die Anmeldung, das Registrieren als auch die Suche nach freigegebenen Dateien nicht funktionieren.

Weiterhin existieren dezentrale Peer-to-Peer-Netzwerke ohne zentralen Server für einen Verzeichnisdienst. Ein Peer entdeckt hierbei dynamisch andere Peers im Netzwerk und kommuniziert mit diesen, um Daten und Informationen auszutauschen. Vorteilhafterweise hängt die Funktion und Verfügbarkeit eines solchen dezentralen Netzwerkes nicht von der Funktion und Verfügbarkeit eines zentralen Servers ab. Allerdings müssen die Peers sich nun selbstständig finden. Dies geschieht üblicherweise nur innerhalb einer bestimmten lokalen Nähe (z.B. mittels IP-Multicasting mit einem maximalen Hop-Count) oder über eine Liste von vorbekannten Peers, die manuell erstellt oder von speziellen Servern angefordert wird.

Ein dezentrales Peer-to-Peer-Netzwerk erfordert demzufolge ein eigenständiges Routing-Protokoll, mit dem die Daten über verschiedene Peers gerouted werden. Für eine Suche nach einer Datei übermittelt ein Peer seine Suchanfrage an die ihm bekannten Peers, welche ihrerseits ebenso verfahren. Auf diese Weise wird das gesamte Netzwerk (alle Peers) mit der Suchanfrage geflutet und jeder Peer, der eine der Suchanfrage entsprechende Datei freigegeben hat, meldet dies an den Peer, der die Suche initiierte. Daraufhin kann der suchende Peer einen dieser Peers auswählen und die Datei direkt von diesem anfordern.

Derartige dezentrale Peer-to-Peer-Netzwerke, wie beispielsweise Gnutella, KaZaA, Freenet, MajoNatiorl, Edonkey2000, usw. bieten keinen Verzeichnisdienst, also keine im Netz abrufbaren Listen mit Information über die freigegebenen Dateien. Nachteiligerweise sind Suchen bei derartigen dezentralen Peer-to-Peer-Netzwerken durch das notwendige Fluten des gesamten Netzwerkes vergleichsweise zeitintensiv und uneffektiv.

Aus EP-A-1 009 130 ist ein verteilter Verzeichnisdienst bekannt, welcher Daten auf Basis von Benutzern bzw. Benutzergruppen einer Organisation aufteilt.

Aus Michael T. Prinkey: "An Efficient Scheme for Query Processing on Peer-to-Peer Networks" HTTP://AEOLUSRES.HOMESTEAD.COM/FILES/, 1. Januar 2001 (2001-01-01), XP002241324 Aeolus Research, Inc (Seite 6, zwei letzte Absätze; Figur 4) ist ein Verfahren zur Indizierung eines Dokuments bekannt. Hierbei werden Hashwerte für nicht oft benutzte Wörter berechnet. Es werden nur lokal gespeicherte Daten bearbeitet.

Aus "Scoping Multicasts in WAN-Interconnected Local Networks" IBM TECHNICAL DISCLOSURE BULLETIN, IBM CORP. NEW YORK, US, Bd. 34, Nr. 8, 1992, Seiten 68-71, XP000302049 ISSN: 0018-8689 (Seite 68, letzter Absatz und Seite 70, Absatz Nr. 4) ist ein Broadcasting-Verfahren zum Browsen eines Netzwerks über LAN-Grenzen hinweg bekannt. Hierbei wird jedoch kein Verzeichnisdienst gebildet, sondern lediglich verwendet.

Der vorliegenden Erfindung liegt deshalb die Aufgabe zugrunde, ein Verfahren zur Bildung eines Verzeichnisdienstes in einem Peer-to-Peer-Netzwerk zu schaffen, der eine schnelle und effektive Suche nach freigegebenen Ressourcen ermöglicht und eine hohe Verfügbarkeit und Funktion des Peer-to-Peer-Netzwerkes gewährleistet.

Diese Aufgabe wird erfindungsgemäß durch ein Verfahren sowie ein Computerprogrammprodukt und einem Datenträger mit einem solchen Computerprogrammprodukt mit den Merkmalen der Anspruchs 1, 10 und 11 gelöst.

Durch die Aufteilung des Verzeichnisdienstes auf mehrere Gruppen kann eine Suchanfrage schnell und effektiv an die entsprechenden Gruppen übermittelt und beantwortet werden, ohne dass die Verfügbarkeit und die Funktion des gesamten Netzes von einem zentralen Server abhängen.

Hierbei muss eine Anfrage zur Freigabe einer Ressource oder Suche nach einer Ressource nur noch an einen Teil der Peers in einem Peer-to-Peer-Netzwerk übermittelt werden, so dass vorteilhafterweise die Effizienz und Geschwindigkeit einer Suche oder Freigabe gegenüber einem Fluten des gesamten Netzwerkes gesteigert wird. Gleichzeitig hat aber ein (unwahrscheinlicher) Ausfall einer ganzen Gruppe nicht die Funktionsunfähigkeit des gesamten Peer-to-Peer-Netzwerkes zur Folge.

Dem Ausfall einer ganzen Gruppe kann erfindungsgemäß vorgebeugt werden, indem mehrere Gruppenmitglieder die identische Information speichern. Durch diese Gruppenbildung entsteht vorteilhafterweise eine Redundanz der Information innerhalb einer Gruppe, so dass der Ausfall einzelner Rechner in einer Gruppe keinen Informationsverlust über die freigegebenen Dateien (Verzeichnis) zur Folge hat.

Die Zuordnung einer Ressource zu einer Gruppe erfolgt in bevorzugter Ausführungsform der Erfindung über eine Zuordnungsvorschrift, beispielsweise das Hashing-Verfahren, mittels welcher Zuordnungswerte, beispielsweise Hash-Werte, aus einem vorgegebenen begrenzten Wertebereich in Abhängigkeit der Ressource bzw. deren bekannte Parameter berechnet werden.

Als Parameter können hierbei beispielsweise Art der Ressource, Bezeichnung der Ressource, usw. dienen. So ist es denkbar, für eine Datei als freizugebende Ressource (File-Sharing-Anwendung) 16-Bit breite Hash-Werte - also aus einem Wertebereich bzw. Adressraum von 0-65535 - aus dem Dateinamen bzw. den Nämensteilen zu berechnen.

Eine derartige Zuordnung muss nicht zwingend eindeutig sein, so dass selbst bei einer eindeutigen Zuständigkeit einer Gruppe für genau einen Zuordnungswert, insbesondere Hash-Wert, eine Gruppe in der Regel für mehrere Ressourcen zuständig ist.

In der bevorzugten Ausführungsform der Erfindung wird ein derartiger berechneter Zuordnungswert eindeutig auf eine einzige Multicast-IP-Adresse, beispielsweise mittels Adresstabellen, abgebildet, wobei eine Gruppe nur für eine Multicast-IP-Adresse zuständig ist und jede Anfrage nur an die jeweils zuständige Gruppe bzw. Gruppen übermittelt wird.

Selbstverständlich ist es aber auch denkbar, mehrere Multicast-IP-Adressen oder einen ganzen Bereich aus einem vorgegebenen bekannten Adressraum einer Gruppe zuzuordnen. Hierbei könnten die Gruppen sich über entsprechend vordefinierte Grenzwerte bzw. Schwellwerte in ihrer Größe und Effektivität selbst verwalten. Beispielsweise ist es denkbar, dass sich eine Gruppe von Peers bei Erreichen einer maximalen Größe (Anzahl von Peers) in zwei Gruppen aufteilt und jede Gruppe für einen ebenfalls aufgeteilten - beispielsweise halbierten Adressbereich - zuständig ist. Eine derartige Neuaufteilung könnte dann als Zusatzinformation bei jedem Dialog (Suchanfrage, Anmelden und Freigabe von Ressourcen) übermittelt werden, so dass wiederum jede Anfrage nur an die jeweils zuständige Gruppe bzw. Gruppen übermittelt wird.

Die Übermittlung einer Anfrage (Freigabe oder Suche) erfolgt nach der Erfindung vorzugsweise mittels IP-Multicasting, beispielsweise innerhalb eines IP-basierenden größeren Netzes, vorzugsweise das Internet. Vorteilhafterweise erfolgt die Suche hierdurch im Vergleich zu dem bekannten Peer-to-Peer Routing schneller und effizienter (kein Routing mehr auf Anwendungsebene).

In einer bevorzugten Ausführungsform der Erfindung ist die Information (über freigegebene Ressourcen, die zugehörigen Peers bzw. deren IP-Adresse, etc.) innerhalb einer Gruppe in mehreren Peers redundant vorhanden. Hierdurch kann vorteilhafterweise auch bei Ausfall einzelner oder mehrerer Peers innerhalb einer Gruppe die Funktionsfähigkeit dieser Gruppe erhalten bleiben.

In weiterer Ausgestaltung der Erfindung beantwortet innerhalb der zuständigen Gruppe nur ein ausgewählter Peer eine Anfrage (Suche oder Freigabe), so dass vorteilhafterweise die Geschwindigkeit einer Anfrage und eines Ergebnisses im Vergleich zu einem Dialog mit allen Gruppenmitgliedern gesteigert werden kann. Die Auswahl des antwortenden bzw. dialogführenden Peers erfolgt beispielsweise über eine Abstandsmetrik - wie geringster Hop-Count o.ä. - oder durch andere vordefinierte Vorschriften, wie beispielsweise erstes Mitglied einer Gruppe (erstangemeldetes).

In weiterer Ausgestaltung der Erfindung wird einem neuen Peer bei der Anmeldung bzw. Freigabe einer Ressource mitgeteilt, ob er aktives oder passives Mitglied der Gruppe oder Gruppen werden soll, an welche er die Anfrage mittels IP-Multicast übermittelt hat. Die Entscheidung über aktives oder passives Mitglied hängt hierbei vorteilhafterweise von der Last bzw. der Auslastung der Gruppe ab, welche über übliche Mechanismen aus einzelnen Parametern (Anzahl der Suchanfragen, Übertragungsrate) oder einer beliebigen Kombination hieraus gewonnen werden kann. Wird ein gewisser vordefinierter Schwellwert einer Last überschritten, so wird einem neuen Peer bei der Anmeldung mitgeteilt, dass er aktives Mitglied der Gruppe werden soll und die Information der Gruppe übertragen.

Unterschreitet die Last einen bestimmten Schwellwert, welcher identisch mit dem vorstehend genannten Schwellwert sein kann aber nicht zwingend sein muss, wird einem neuen Peer bei der Abmeldung mitgeteilt, dass er nur passives Mitglied der Gruppe wird. Derartige passive Mitglieder können beispielsweise auf einer Warteliste - beispielsweise nach Anfragezeitpunkt o.a. Kriterien sortiert - geführt werden und der Reihe nach bei Überschreiten des Schwellwertes der Last einer Gruppe aktiviert werden.

In weiterer Ausgestaltung der Erfindung besteht die Möglichkeit, dass einzelne aktive Gruppenmitglieder (Peers) bei Erreichen eines Grenzwertes der eigenen (Peer-)Last oder bei Funktionsstörung zu passiven Mitgliedern der Gruppe werden und evtl. durch andere passive Mitglieder ersetzt werden, beispielsweise weil der Grenzwert der Auslastung der Gruppe hierdurch überschritten wurde oder eine grundsätzliche Austauschvorschrift existiert.

Weitere vorteilhafte Ausführungsformen der Erfindung ergeben sich aus den Unteransprüchen.

Die Erfindung wird nachfolgend anhand eines in der Zeichnung erläuterten Ausführungsbeispiels näher erläutert. In der Zeichnung zeigen:
- Fig. 1: ein Ablaufdiagramm zur Anmeldung und zur Freigabe von Ressourcen eines neuen Peers in einem Peer-to-Peer-Netzwerk mit einem verteilten Verzeichnisdienst nach der Erfindung (Ressourcen Anmeldung und Gruppenbildung) und
- Fig. 2: ein Ablaufdiagramm zur Suche nach Ressourcen in einem Peer-to-Peer-Netzwerk mit einem verteilten Verzeichnisdienst nach der Erfindung (Ressourcen Suche und Übertragung).

Das Ausführungsbeispiel zeigt das erfindungsgemäße Verfahren anhand einer File-Sharing-Anwendung, also Zur-Verfügung-Stellung einer Datei zur gemeinsamen Nutzung. Die Hash-Werte sind hierbei beispielsweise 16-Bit-breit und werden aus den einzelnen Worten des Dateinamens generiert (z.B. mit einem Standardalgorithmus wie jener der Java String-Klasse). Als Multicast-IP-Adressbereich ist im Ausführungsbeispiel 239.192.0.0-239.192.255.255 gewählt, der von der IANA für organisationsinterne Anwendungen reserviert (RFC 2365) ist und beispielsweise von einer beliebigen Firma frei verwendet werden kann.

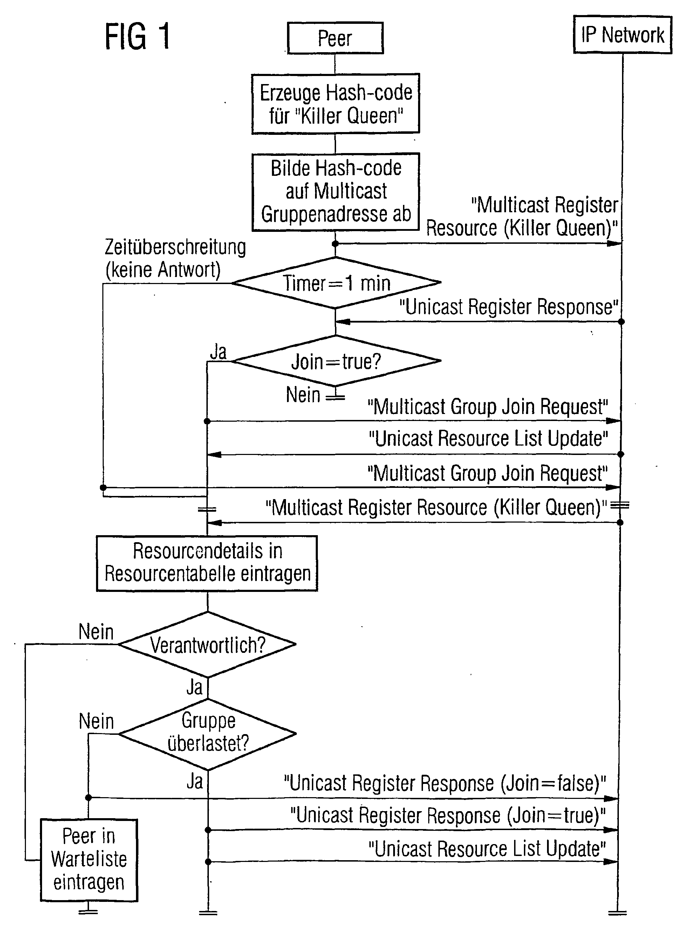

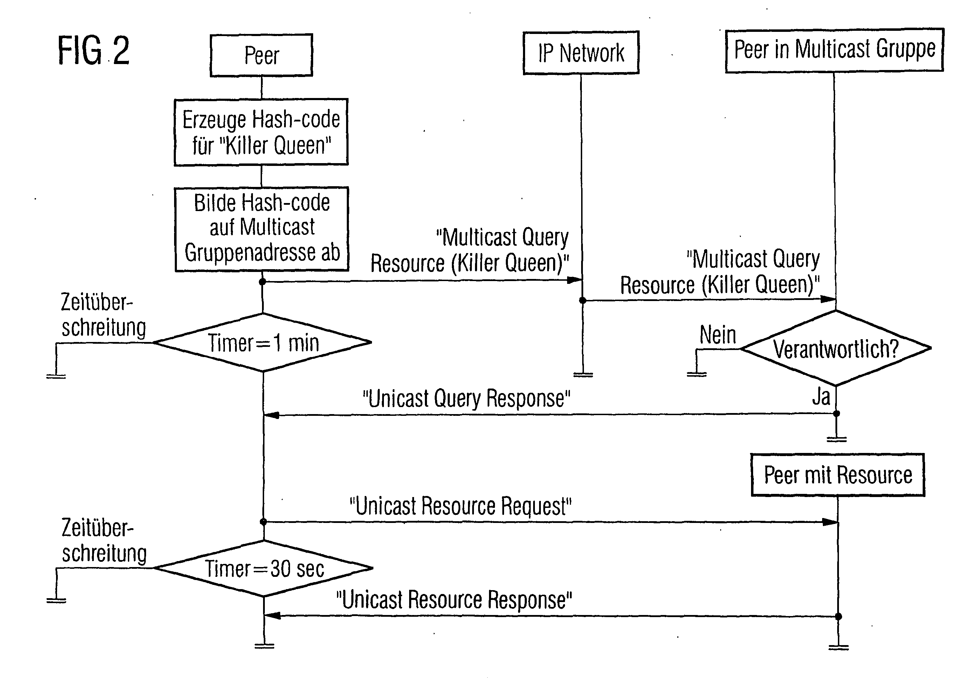

Im Folgenden werden die Vorgänge, wie sich ein Peer in das Netzwerk einfügt, wie ein Peer seine freigegebenen Dateien im Netzwerk registriert (Fig. 1) und wie die Suche innerhalb des Netzwerkes durchgeführt wird (Fig. 2), wie in den Ablaufdiagrammen nach Fig. 1 und Fig. 2 dargestellt, ausführlich beschrieben.

### Registrieren bzw. Freigabe von Dateien nach Fig. 1

Um eine Datei zur Verfügung zu stellen, berechnet ein Peer ihren Hash-Wert (also z.B. anhand des Namens "Killer Queen" - bzw. Namensbestandteilen "Killer" und "Queen" getrennt durch Leerzeichen oder andere vordefinierte Trennzeichen - mit der Hash-Funktion der Java String Klasse) und sendet eine Registrierungsanfrage "Multicast Register Ressource (Killer Queen)" an die zugehörige Multicast-Adresse welche er aus einer im Peer vorhandenen Adresstabelle eindeutig ermittelt.

Hierbei sind einem neuen Peer nicht nur die Abbildungsvorschrift (Ermittlung von Hash-Werten in Abhängigkeit von der Ressource und Abbilden auf entsprechende Multicast-IP-Adressen) sondern auch der Wertebereich der Hash-Werte sowie der Adressraum der Multicast-IP-Adressen bekannt (beispielsweise in Form einer auf dem Peer laufenden Client-Software).

Mit der Registrierungsanfrage kann hierbei zusätzlich zur Bezeichnung der freizugebenden Ressource, beispielsweise die Datei "Killer Queen" und seiner eigenen IP-Adresse, beispielsweise 138.24.67.88 auch eine eindeutige Identifizierungsinformation, beispielsweise ein sogenannter UUID (Universal Unique Identifier) in einem Packet (Registrierungs-Paket) übermittelt werden.

Falls noch kein anderer Peer für diese Multicast-IP-Adresse zuständig bzw. verantwortlich ist - für den Peer anhand einer Zeitüberschreitung (Timeouts), beispielsweise "Timer>1min", erkennbar bzw.. Fehlen eines entsprechenden Antwortpakets, eventuell erst nach erfolgloser Wiederholung (vorbestimmte Anzahl von Versuchen) - verwaltet er fortan selbst Such- und Registrierungs-Anfragen an diese Multicast-IP-Adresse.

Dazu sendet er ein IP-Multicast "Join Group"-Paket, um Pakete zu erhalten, die an diese Multicast-Adresse gerichtet sind bzw. trägt seine eigene freizugebende Ressource (inkl. vorstehend genannte Zusatzinformation, also IP-Adresse, Bezeichnung usw.) in seine (Gruppen-)Ressourcentabelle ein.

Andernfalls erhält der Peer eine Bestätigung "Unicast Register Response" seiner Registrierungsanfrage durch wenigstens einen Peer der Gruppe und damit die Mitteilung, ob er aktives oder passives Gruppenmitglied wird, d.h., ob er fortan Anfragen an die Multicast-IP-Adresse bearbeiten soll, oder in eine Warteliste eingetragen wird um ggf. später in die Gruppe der aktiven Verwalter der Informationen aufgenommen zu werden, die dieser Multicast-IP-Adresse zugeordnet sind. Die Entscheidung über aktive oder passive Mitgliedschaft kann hierbei abhängig von der Last der Gruppe (CPU-Last, Speicherkapazität, usw.) getroffen werden.

Wird der Peer zum aktiven Verwalter, erhält er nach einer "Multicast Group Join Request" an die Gruppe die aktuellen Informationen zu den registrierten Ressourcen "Unicast Resource List Update" und anderen Gruppenmitgliedern von wenigstens einem, beispielsweise über ein vordefiniertes Auswahlverfahren ermitteltem, anderen aktiven Gruppenmitglied (Update der Ressourcentabelle, beispielsweise über unicast und download der Ressourcentabelle eines anderen Gruppenmitgliedes via ftp).

Falls die Netzwerkverbindung oder Systemressourcen eines Peers durch Zugehörigkeit zu einer oder mehreren Gruppen, beispielsweise durch hohe CPU-Last, zu geringe Speicherkapazität, usw. überlastet wird, kann der Peer veranlassen, zum passiven Gruppenmitglied zu werden.

Die Aktionen bzw. Reaktionen der Gruppe bzw. wenigstens eines Peers einer Gruppe auf die vorstehend beschriebenen (obere Hälfte der Fig. 1) Anfragen eines anfragenden Peers ist zur Verdeutlichung als Ablaufdiagramm in der unteren Hälfte der Fig. 1 dargestellt. Entsprechend erhält ein (Registrierungs-)anfragender Peer mit einer Antwort "Unicast Register Response" nur die Antwort ein aktives Mitglied zu werden (Join=true), wenn zuständig und die Gruppe nicht überlastet ist. Ansonsten wird der anfragende Peer, wie dargestellt, in eine Warteliste eingetragen.

### Beispiel:

Der Peer "xyz" möchte die Datei "Killer Queen" freigeben. Er generiert für die beiden Worte die Hash-Werte. Für "Killer" sei dieser 12345 und für "Queen" sei er 42424. Nun sendet er Registrierungsinformationen an die Multicast-IP-Adressen (12345->) 239.192.48.57 und (42424->) 239.192.165.184.

Anhand der Antworten, die er auf seine ursprünglichen Informationen erhält, sowie seiner Belastungssituation, wird er nun zum aktiven oder passiven Mitglied in den beiden Gruppen, die den Multicast-IP-Adressen zugeordnet sind.

### Suchen nach einer Datei nach Fig. 2

Ein Peer kann eine Datei nun anhand ihrer "Schlüsselworte", beispielsweise "Killer" oder "Queen" auffinden. Sucht ein Peer beispielsweise nach Dateien mit "Queen" im Dateinamen, so generiert er den Hash-Wert für dieses Wort (42424), ermittelt, beispielsweise mittels Adresstabelle, die Multicast-IP-Adresse zu diesem Hash-Wert (239.192.165.184) und sendet an diese Multicast-IP-Adresse über ein IP-basierendes Netzwerk seine Anfrage "Multicast Query Ressource (Killer Queen)" nach Dateien mit "Queen" oder wie im Ausführungsbeispiel "Killer Queen" im Dateinamen beispielsweise als Paket mit weiteren Informationen wie eigene IP-Adresse, UUID, usw. und wartet auf eine Antwort (Unicast Query Response).

Innerhalb dieser Gruppe werden (beispielsweise nach einer vorgegebenen Auswahlvorschrift wie einem Round-Robin-Verfahren o.ä.) ein oder mehrere Peers ausgewählt, die auf die Suchanfrage "Multicast Query Ressource (Killer Queen)" antworten "Unicast Query Response", und dem anfragenden Peer eine Liste von Peers geben, von denen er die Dateien mit "Queen" im Dateinamen direkt erhalten kann.

Sofern die Antwort "Unicast Query Response", beispielsweise keine Gruppe vorhanden oder Übermittlungsfehler, nicht innerhalb eines vorbestimmten Zeitintervalls, beispielsweise Timer < 1min, erfolgreich eingeht, wird an dem anfragenden Peer, eventuell nach einigen Wiederholungsversuchen vorbestimmter Anzahl, als Ergebnis "kein Treffer gefunden" ausgegeben.

Zu einem oder mehreren von diesen Peers kann, wie in der unteren Hälfte von Fig. 2 dargestellt, der anfragende Peer eine direkte Anfrage "Unicast Ressource Request" (IP-Unicasting) starten und bei erfolgreicher Verbindung innerhalb eines vorbestimmten Zeitlimits "Timer=30sek" eine Antwort "Unicast Ressource Response" mit der gesuchten Ressource, beispielsweise die Datei "Killer Queen", erhalten.

Bei Überschreiten des mittels Timers überwachten Zeitlimits - beispielsweise weil der gesuchte Peer offline ist oder bei anderen Verbindungsfehlern - kann der anfragende Peer andernfalls weitere oder spätere Verbindungsanfragen "Unicast Ressource Request" an diesen oder andere Peers der übermittelten Liste stellen.

Im Folgenden werden die im Ausführungsbeispiel verwendeten Verfahren näher erläutert.

### Hashing-Verfahren

Für jede Ressource, die ein Peer freigeben möchte, werden ein oder mehrere Hash-Werte generiert (in einem festgelegten Bereich bzw. Adressraum, z.B. 0-65535 bei einem 16-Bit Hash-Wert). Dies geschieht durch eine Hash-Funktion, die jedem Peer bekannt ist. Eine Ressource könnte z.B. eine Datei sein; der Hash-Wert wird in diesem Fall aus dem Dateinamen generiert (besser: aus den einzelnen "Worten" des Namens). Hash-Werte können aber auch in Kombination oder Einzelverwendung aus anderen eine Ressource kennzeichnenden Parametern, beispielsweise Dienstbeschreibungen für verteilte Dienste (Jini, .NET, etc.), Dateiart bzw. Extension (.doc, .mp3, .jpg, .mpg, usw.) u.a. erzeugt werden. Hierdurch ist das erfindungsgemäße Verfahren nicht nur auf File-Sharing-Anwendungen beschränkt, sondern für beliebige Dienste (Drucker-Sharing, Modem-Sharing, usw.) verwendbar.

Für jeden Hash-Wert existiert genau eine Gruppe von Peers, die für ihn zuständig ist.

Eine Ressource mit einem bestimmten Hash-Wert wird bei der Gruppe von Peers registriert, die eben diesem Hash-Wert zugeordnet ist. Eine Gruppe ist hierbei wie in diesem Ausführungsbeispiel nur für einen Hash-Wert zuständig. Es sind aber, wie vorstehend erläutert, andere Ausführungsformen der Erfindung denkbar, in denen eine Gruppe für Hash-Werte in einem bestimmten Bereich (z.B. 32768-65535) zuständig ist.

Für jeden Hash-Wert einer Ressource meldet der Peer diese bei der Gruppe, die für diesen Hash-Wert zuständig ist, an.

Für eine Suchanfrage wird ebenfalls ein Hash-Wert generiert. Für diesen Hash-Wert wird die zuständige Gruppe ermittelt und die Suchanfrage an diese gestellt. Die Gruppe bzw. ein nach einer entsprechenden Vorschrift (Rangliste, geringster Abstand zu anfragendem Peer bzw. geringster Hop-Count) ausgewählter Peer dieser Gruppe übermittelt das Resultat der Suche direkt an den suchenden Peer.

Obwohl im Ausführungsbeispiel als Zuordnungsvorschrift das Hashing-Verfahren gewählt wurde, ist es selbstverständlich denkbar, ein beliebiges Zuordnungsverfahren zu verwenden, auf das die vorstehend für das Hashing-Verfahren erläuterten Schritte übertragbar sind, so dass die Erfindung nicht auf die Verwendung des Hashing-Verfahrens beschränkt ist.

### Gruppenbildung

Jeder Gruppe von Peers wird eine Multicast-IP-Adresse aus einem bestimmten Bereich zugewiesen. Die Größe dieses Bereiches ergibt sich aus den verwendeten Hash-Werten (Bei einem 16-Bit Hash-Wert werden z.B. Multicast-IP-Adressen im Bereich x.y.0.0-x.y.255.255 benötigt).

Möchte ein Peer eine Ressource zur Verfügung stellen, ermittelt er den Hash-Wert der Ressource und publiziert die Position der Ressource an die zugehörige Multicast-IP-Adresse. Existiert kein verantwortlicher Empfänger für Nachrichten an diese Multicast-IP-Adresse, wird der Peer selbst für diese Adresse verantwortlich und bearbeitet fortan eingehende Registrierungsnachrichten und Suchanfragen. Weitere Peers, die Ressourcen in dieser Multicast-Gruppe anmelden, unterstützen die Verwaltung der Ressourcen in dieser Gruppe. Peers, die neue Ressourcen in einer Gruppe anmelden, nachdem bereits genügend Verwalter für die Ressourcen dieser Gruppe zuständig sind, werden in einer Warteliste verwaltet und können die Gruppe bei Überlastung unterstützen und ausfallende Gruppenmitglieder ersetzen.

Im einfachsten Fall werden Suchanfragen an eine Multicast-Gruppe von allen Mitgliedern der Gruppe beantwortet. Die Effizienz der Bearbeitung kann gesteigert werden, indem das antwortende Gruppenmitglied mittels einer geeigneten (z.B. Abstands-) Metrik bestimmt wird. Passt man, unter Berücksichtigung der verwendeten Metrik, die Mitgliederanzahl einer Gruppe - aus dem Pool wartender Peers - an die Anfragelast an, kann vorteilhafterweise ein balanciertes System entstehen, das Überlastung einzelner Peers vermeidet und sich selbst verwaltet.

Zur Ermittlung der zuständigen Multicast-Gruppe für einen gegebenen Hash-Wert, die sowohl beim Bootstrapping eines Peers als auch bei der Suche von Ressourcen notwendig ist, sind verschiedene Verfahren denkbar: Bei einer geeigneten Vergabe von Bereichen und Multicast-IP-Adressen sind "Brute-Force"-Mechanismen mit einem logarithmischen Aufwand möglich. Durch die Replikation von "Valid Address Tables", gegebenenfalls mit direkter Unterstützung durch die IP-Router im Backbone, lässt sich der Aufwand sogar auf einen einzigen Request reduzieren.

Durch das vorstehend beschriebene erfindungsgemäße Verfahren verteilt sich ein Verzeichnisdienst vorteilhafterweise in jedem Fall (alle Ausführungsbeispiele) grundsätzlich automatisch auf die Peers, die sich im Netzwerk anmelden. Hierbei wird das Verzeichnis bei einer Zunahme von freigegebenen Ressourcen (je mehr Peers im Netzwerk sind, desto mehr Dateien sind in der Regel registriert) gleichzeitig auf die zunehmende Anzahl von benötigten Peers verteilt. Im Vergleich zu dezentralen Netzen fluten auf diese Weise Suchanfragen nicht das gesamte Peer-to-Peer-Netzwerk, sondern werden gezielt an die Peers gerichtet, die Informationen über die in Frage kommenden Dateien besitzen. Hierbei passt sich das System automatisch an die zur Verfügung stehenden Ressourcen (Peers, freigegebene Dateien) an.

## Patentansprüche

1. Verfahren zur Bildung eines Verzeichnisdienstes in einem skalierbaren Peer-to-Peer-Netzwerk, bei dem der Verzeichnisdienst in Teilmengen auf Gruppen mit wenigstens einem Peer verteilt wird,
- wobei zur Freigabe einer und/oder zur Suchanfrage nach einer Ressource über eine Zuordnungsvorschrift in Abhängigkeit von der Ressource Zuordnungswerte aus einem vordefinierten Adressraum gebildet werden und wobei als Zuordnungsvorschrift ein Hashverfahren dient, mittels welchem als Zuordnungswerte Hashwerte berechnet werden,
**dadurch gekennzeichnet, dass**
- für jeden Zuordnungswert nur eine Gruppe zuständig ist und
- die Freigabe einer Ressource oder Suchanfrage nach einer Ressource nur an die zuständigen Gruppen übermittelt wird.

2. Verfahren nach Anspruch 1,
**dadurch gekennzeichnet, dass**
die Freigabe einer Ressource oder Suchanfrage nach einer Ressource nur an die zuständigen Gruppen mittels IP-Multicasting erfolgt.

3. Verfahren nach Anspruch 2,
**dadurch gekennzeichnet, dass**
einer Gruppe eine Multicast-IP-Adresse zugeordnet wird.

4. Verfahren nach Anspruch 3,
**dadurch gekennzeichnet, dass**
eine eindeutige Zuordnung der Hash-Werte zu den Multicast-IP-Adresse erfolgt.

5. Verfahren nach einem der vorhergehenden Ansprüche,
**dadurch gekennzeichnet, dass** innerhalb einer Gruppe mit mehreren Peers Informationen über
freigegebene Ressourcen und die zugehörigen Peers redundant vorhanden sind.

6. Verfahren nach einem der vorhergehenden Ansprüche,
**dadurch gekennzeichnet, dass**
innerhalb der zuständigen Gruppe nur ein ausgewählter Peer antwortet.

7. verfahren nach einem der vorhergehenden Ansprüche,
**dadurch gekennzeichnet, dass**
ein Peer bei der Freigabe einer Ressource in Abhängigkeit von der Last einer vorhandenen zuständigen Gruppe dieser Gruppe aktiv beitritt oder passiv auf eine Warteliste gesetzt wird.

8. Verfahren nach Anspruch 7,
**dadurch gekennzeichnet, dass**
ein Peer abhängig von seiner Last von einem aktiven zu einem passiven Mitglied einer Gruppe wechselt.

9. Computerprogramm, welches in einen Arbeitsspeicher einer Rechenanlage geladen werden kann, mit einem Softwarecode für das Durchführen des Verfahrens nach einem der vorhergehenden Ansprüche, wenn das Computerprogramm auf einer Rechenanlage verläuft.

10. Datenträger mit einem Computerprogramm nach Anspruch 9.

## Claims

1. Method for creating a directory service in a scalable peer-to-peer-network, in which
the directory service is distributed over subsets of groups with the least one peer,
- whereby, to release one resource and/or for a search request for a resource, assignment values are formed from a predefined address space using an assignment specification depending on the resource, and whereby
- a hash method serves as the assignment specification, by means of which hash values are calculated as assignment values,
**characterized in that**
- only one group is responsible for each assignment value,
- the release of a resource or search request for a resource is only transferred to the group responsible.

2. Method in accordance with claim 1,
**characterised in that**
the release of a resource or search request for a resource is only made to the group responsible by means of IP multicasting.

3. Method in accordance with claim 2,
**characterised in that**
a group is assigned a multicast IP address.

4. Method in accordance with claim 3,
**characterised in that**
there is a unique assignment of the hash values to the multicast IP addresses.

5. Method in accordance with one of the preceding claims,
**characterised in that**,
within a group with a number of peers, redundant information about released resources and the associated peers is present.

6. Method in accordance with one of the preceding claims,
**characterised in that**,
within the group responsible only one selected peer responds.

7. Method in accordance with one of the preceding claims,
**characterised in that**
on release of a resource, depending on the load of an existing group responsible, a peer of this group is activated or is set to passive in a queue.

8. Method in accordance with claim 7,
**characterised in that**
a peer changes from an active to a passive member of a group, depending on its load.

9. Computer program which can be loaded into the memory of a computer system with a software code for executing the method in accordance with one of the preceding claims when the computer program runs on a computer system.

10. Data medium with a computer program in accordance with claim 9.

## Revendications

1. Procédé pour constituer un service de répertoire dans un réseau poste à poste extensible dans lequel le service de répertoire est réparti en quantités partielles entre des groupes avec au moins un poste ;
- des valeurs de mappage étant, pour libérer une ressource et/ou pour une demande de recherche d'une ressource, constituées en fonction de la ressource par l'intermédiaire d'une règle de mappage à partir d'un espace d'adresses prédéfini ; et
- une procédure de hachage, au moyen de laquelle sont calculées en tant que valeurs de mappage des valeurs de hachage, servant de règle de mappage ;
**caractérisé en ce que** :
- un seul groupe est compétent pour chaque valeur de mappage ; et
- la libération d'une ressource ou la demande de recherche d'une ressource est communiquée uniquement aux groupes compétents.

2. Procédé selon la revendication 1, **caractérisé en ce que** la libération d'une ressource ou la demande de recherche d'une ressource sont communiquées par multidiffusion IP aux groupes compétents uniquement.

3. Procédé selon la revendication 2, **caractérisé en ce qu'**une adresse IP de multidiffusion est associée à un groupe.

4. Procédé selon la revendication 3, **caractérisé en ce qu'**il y a affectation univoque des valeurs de hachage aux adresses IP de multidiffusion.

5. Procédé selon l'une des revendications précédentes, **caractérisé en ce que**, au sein d'un groupe avec plusieurs postes, des informations sur des ressources libérées et sur les postes associés sont présentes de manière redondante.

6. Procédé selon l'une des revendications précédentes, **caractérisé en ce que**, au sein du groupe compétent, seul un poste sélectionné répond.

7. Procédé selon l'une des revendications précédentes, **caractérisé en ce que**, lors de la libération d'une ressource, un poste, en fonction de la charge d'un groupe compétent présent, adhère comme membre actif à ce groupe ou est repris comme membre passif sur une liste d'attente.

8. Procédé selon la revendication 7, **caractérisé en ce qu'**un poste passe du statut de membre actif au statut de membre passif d'un groupe en fonction de sa charge.

9. Programme informatique qui peut être chargé dans une mémoire de travail d'une installation informatique, avec un code logiciel pour exécuter le procédé selon l'une des revendications précédentes lorsque le programme informatique tourne sur une installation informatique.

10. Support de données avec un programme informatique selon la revendication 9.
